# EUROPEAN PATENT SPECIFICATION

(11) **EP 4 687 598 B1**
(45) Date of publication and mention of the grant of the patent: **27.05.2026**
(21) Application number: 24799606.9
(22) Date of filing: 06.11.2024
(51) Int. Cl.: A47J 42/02, A47J 42/12, A47J 42/08, A47J 42/18

(54) **COFFEE GRINDER ASSEMBLY METHOD AND MANUFACTURING ASSEMBLY FOR IMPLEMENTING THE SAME**
KAFFEEMÜHLENANORDNUNGSVERFAHREN UND HERSTELLUNGSANORDNUNG ZUR IMPLEMENTIERUNG DESSELBEN
PROCÉDÉ D'ASSEMBLAGE DE MOULIN À CAFÉ ET ENSEMBLE DE FABRICATION POUR LA MISE EN OEUVRE DE CELUI-CI

(30) Priority: 11.12.2023 EP 23215432
(43) Date of publication of application: 11.02.2026
(73) Proprietor: Versuni Holding B.V., 1082 MD Amsterdam (NL)
(72) Inventor: HOLWERDA, Simon Renze, 5656 AE Eindhoven (NL); BERENDS, Evert Erik, 5656 AE Eindhoven (NL)
(74) Representative: Vollering, Stefanus Franciscus Maria
(86) International application number: PCT/EP2024/081257
(87) International publication number: WO 2025/124804

(56) References cited:
- WHOLE LATTE LOVE: "How to: Espresso Grinder Clean, Calibrate, and SSP Burr Upgrade Install", 18 September 2020 (2020-09-18), XP093146614, Retrieved from the Internet <URL:https://www.youtube.com/watch?v=IFd_vdAVu14> [retrieved on 20240328]
- THE WIRED GOURMET: "Easy And Safe Burr Alignment", 1 January 2021 (2021-01-01), XP093146630, Retrieved from the Internet <URL:https://www.youtube.com/watch?v=Gb3PgeQ6ewY> [retrieved on 20240328]
- HOON'S COFFEE: "Turin DF83 "SSP HU" Burr Live Installation", 15 December 2022 (2022-12-15), XP093146696, Retrieved from the Internet <URL:https://www.youtube.com/watch?v=DGhZ0l0K4qQ> [retrieved on 20240328]
- FRANK DURRA: "Alignment tool EK43 v3", 21 November 2017 (2017-11-21), XP093234601, Retrieved from the Internet <URL:https://www.youtube.com/watch?v=yGUfX5hHl0Y> [retrieved on 20241216]
- MICHAEL CAMERON: "EK43 Alignment", 29 December 2016 (2016-12-29), XP093234801, Retrieved from the Internet <URL:https://www.youtube.com/watch?v=yssZ83uLwno> [retrieved on 20241216]

## Description

### FIELD OF THE INVENTION

The invention relates to a method for assembling a coffee grinder, and a coffee grinder obtainable from the method. Further provided is a manufacturing assembly for implementing the method.

### BACKGROUND OF THE INVENTION

Coffee grinders tend to require calibration during manufacture, in order to achieve the desired particle size and particle size distribution of the ground coffee. This conventionally involves grinding coffee beans to verify whether the coffee grinder is within specification, e.g. a specification comprising a given particle size distribution. However, using coffee beans to perform the calibration has various disadvantages. In particular, the use of coffee beans adds significant cost, waste and a relatively large carbon footprint to mass manufacturing of such coffee grinders. In this respect, vast quantities of coffee beans are conventionally shipped to manufacturers of coffee grinders for calibration purposes.

Calibrating coffee grinders in an industrial setting, e.g. factory, using coffee beans may also create dust pollution and may be demanding in terms of space devoted to the coffee beans-based calibration in the setting.

Furthermore, careful cleaning of each coffee beans-calibrated coffee grinder may be required to remove coffee grounds therefrom to avoid the customer being supplied with a product they regard as having been pre-used. Traces of coffee grounds nonetheless tend to remain in the coffee grinder even after relatively thorough cleaning, e.g. involving vacuum cleaning the assembled coffee grinder.

Whole Latte Love: "How to: Espresso Grinder Clean, Calibrate, and SSP Burr Upgrade Install" discloses a method of replacing burrs in a coffee grinder (Available at: https://www.youtube.com/watch?v=IFd_vdAVu14 (published 2020-09-18)).

The Wired Gourmet: "Easy and Safe Burr Alignment" discloses an easy and safe method of burr alignment in a coffee grinder (Available at: https://www.youtube.com/watch?v=Gb3PgeQ6ewY (published 2021-01-01)).

Hoon's Coffee: "Turin DF83 "SSP HU" Burr Live installation" discloses a method of burr installation in a coffee grinder in real time (Available at: https://www.youtube.com/watch?v=DGhZ0l0K4qQ (published 2022-12-15)).

Frank Durra: "Alignment tool EK43 v3" discloses an alignment tool for a coffee grinder (Available at https://www.youtube.com/watch?v=yGUfX5hHl0Y (published 2017-11-21)).

Michael Cameron: "EK43 Alignment" discloses aligning burrs of a coffee grinder (Available at https://www.youtube.com/watch?v=yssZ83uLwno (published 2016-12-29)).

### SUMMARY OF THE INVENTION

The invention is defined by the claims.

According to examples in accordance with an aspect of the invention, there is provided a method for assembling a coffee grinder comprising a first grinder member and a second grinder member, a grinding space being defined between the first and second grinder members in which beans are grindable, the method comprising: assessing, prior to arranging the first grinder member and the second grinder member to define the grinding space, the first grinder member independently of the second grinder member to determine at least one first parameter relevant to a geometry of the first grinder member; and/or assessing, prior to arranging the first grinder member and the second grinder member to define the grinding space, the second grinder member independently of the first grinder member to determine at least one second parameter relevant to a geometry of the second grinder member, wherein the method further comprises: arranging, based on the at least one first parameter and/or the at least one second parameter, the first grinder member and the second grinder member to define the grinding space.

The terms "assessing" and "assessment" in this context may refer to quality control analysis of the respective manufactured grinder member, with this quality control analysis being performed prior to arranging, in other words assembling, the first grinder member and the second grinder member to define the grinding space.

The assessment of one of the first and second grinder members being implemented independently of the other of the first and second grinder members may mean that the first and second grinder members are separate from each other throughout the assessment, thereby excluding, for example, temporary assembly/disassembly of the first and second grinder members for the purpose of performing the assessment.

Basing the assembly of the first and second grinder members on the pre-determined first parameter(s) and/or second parameter(s) may obviate the need for calibrating the coffee grinder using a grindable product, e.g. coffee beans, with concomitant decrease in manufacturing cost, carbon footprint, and contamination of the assembled coffee grinder. Indeed, in some embodiments the method does not include grinding such a grindable product, e.g. coffee beans, using the coffee grinder during manufacture of the coffee grinder.

In some embodiments, the method comprises identifying the first grinder member and/or the second grinder member as being within specification based on the first parameter(s) and the second parameter(s) respectively.

Grinder members that are identified as being outside specification may not be used in the arranging step of the method.

This by itself may assist to ensure that the assembled coffee grinder is suitably calibrated because out-of-specification grinder members may not be used to assemble the coffee grinder.

The arranging the first grinder member and the second grinder member to define the grinding space comprises adjusting, based on the at least one first parameter and/or the at least one second parameter, an orientation of the first and second grinder members relative to each other. Such orientation adjustment based on the first parameter(s) and/or the second parameter(s) may obviate the need for calibration of the coffee grinder using a grindable product.

In embodiments in which the method does not include grinding a grindable product, e.g. coffee beans, the method may accordingly not involve adjusting the orientation of the first and second grinder members based on such grinding of such a grindable product, e.g. based on a particle size distribution of ground product, e.g. coffee, resulting from such grinding.

In some embodiments, the adjusting the orientation of the first and second grinder members relative to each other comprises minimizing a variation in a distance across a gap defined between the first and second grinder members based on the at least one first parameter and the at least one second parameter. This may assist to reduce variation in particle size of the ground product, e.g. ground coffee, based on which part of the gap it has passed through.

In some embodiments, the distance is a minimum distance across the gap where the first and second grinder members most closely approach each other. In such embodiments, the minimum distance may be between highest parts of first teeth included in the first grinder member and highest parts of second teeth included in the second grinder member.

In some embodiments, the method comprises selecting the first grinder member from a plurality of first grinder members based on the at least one first parameter and/or selecting the second grinder member from a plurality of second grinder members based on the at least one second parameter. In such embodiments, one or both of the first and second grinder members may, for example, be selected based on their geometry in order to minimize variation in the distance across the gap defined between the first and second grinder members.

In some embodiments, the method comprises defining a predicted particle size distribution, e.g. a D[4;3], of the ground product, e.g. ground coffee, deliverable by the coffee grinder based on the first and/or second parameter(s). In such embodiments, a function, e.g. a transfer function, may be used to determine the predicted particle size distribution based on the first and/or second parameter(s).

Such a function, e.g. transfer function, may alternatively or additionally be used to adjust, based on the at least one first parameter and/or the at least one second parameter, the orientation of the first and second grinder members relative to each other.

The transfer function may be derived using a routine design of experiments (DoE) approach that identifies the influence of the first and/or second parameter(s) on particle size distribution, e.g. D[4;3], of a ground product, e.g. ground coffee, prepared using a sample of coffee grinders used for the DoE. For example, the DoE may determine influence of such first and/or second parameter(s) on whether or not a specified particle size distribution is achieved.

Such a DoE approach may thus enable prediction, without the use of a grindable product, e.g. coffee beans, in the manufacturing setting, of whether the coffee grinder assembled using a given first grinder member and a given second grinder member will be within specification.

In some embodiments, the first teeth of the first grinder member have surfaces that partly delimit the grinding space, with the at least one first parameter comprising at least one first teeth parameter relevant to a geometry of the first teeth. Alternatively or additionally, the second teeth of the second grinder member having surfaces that partly delimit the grinding space, with the at least one second parameter comprising at least one second teeth parameter relevant to a geometry of the second teeth.

Such teeth parameters have been found to provide a particularly useful basis on which to complete assembly of the coffee grinder and ship the coffee grinder to a customer without this process requiring calibration of the coffee grinder using a grindable product, such as coffee beans.

The assessment can be performed in any suitable manner, in particular using any suitable measurement, e.g. 3D measurement, equipment. In some embodiments, the assessing of the first parameter(s) and/or the second parameter(s) comprise(s) optical measurement of the first grinder member and/or the second grinder member. Such optical measurement may be readily implementable in a manufacturing setting, e.g. a factory, in which the coffee grinder is assembled.

In some embodiments, the measuring, e.g. optical measuring, of the first parameter(s) and/or the second parameter(s) comprises using a 3D scanner, e.g. an optical profilometer.

One of the first and second grinder members is a fixed grinder member whose position is fixed during grinding of the beans, with the other of the first and second grinder members being a driven grinder member drivable to grind the beans against the fixed grinder member.

The adjusting of the orientation of the first and second grinder members relative to each other comprises moving the fixed grinder member while the driven grinder member remains static.

The adjusting the orientation of the first and second grinder members relative to each other comprises rotating the fixed grinder member about an axis about which the driven grinder member is rotated during grinding, while the driven grinder member remains static.

In some embodiments, adjustment of the orientation of the fixed grinder member may be implemented, for example, by manipulation of an adjustment member, e.g. an adjustment knob, configured to cause, when manipulated, rotation of the fixed grinder member.

According to another aspect there is provided a coffee grinder obtainable by the method according to any of the embodiments disclosed herein. Particular mention is made of the coffee grinder being free of ground product, e.g. free of ground coffee, noting that the method may obviate the need for calibration of the coffee grinder using a grindable product, e.g. coffee beans, during assembly.

According to a further aspect there is provided a manufacturing assembly for assembling a coffee grinder, which coffee grinder comprises a first grinder member and a second grinder member, a grinding space being defined between the first and second grinder members in which beans are grindable, the manufacturing assembly comprising: an assessment station configured to enable: assessment of, prior to arranging the first grinder member and the second grinder member to define the grinding space, the first grinder member independently of the second grinder member to determine at least one first parameter relevant to a geometry of the first grinder member; and/or assessment of, prior to arranging the first grinder member and the second grinder member to define the grinding space, the second grinder member independently of the first grinder member to determine at least one second parameter relevant to a geometry of the second grinder member, and an assembly station at which the first grinder member and the second grinder member are arranged to define the grinding space based on the at least one first parameter and/or the at least one second parameter.

In some embodiments, the assessment station is configured to measure, e.g. perform a 3D measurement of the first grinder member and/or the second grinder member. Alternatively or additionally, the assessment station may be configured to optically measure the first grinder member and/or the second grinder member. In such embodiments, the assessment station may include, for example, a 3D scanner, e.g. an optical profilometer.

More generally, the manufacturing assembly may be configured to implement the method according to any of the embodiments described herein. Alternatively or additionally, the manufacturing method may be configured to manufacture the coffee grinder according to any of the embodiments described herein.

It is noted that the term "station" may be used interchangeably with the term "stage" throughout this document in the context of stages, in other words physical stages, of the manufacturing assembly.

It is noted that embodiments described herein in relation to the method may be applicable to the coffee grinder and the manufacturing assembly, embodiments described herein in relation to the coffee grinder may be applicable to the method and the manufacturing assembly, and embodiments described herein in relation to the manufacturing assembly may be applicable to the method and the coffee grinder.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
FIG. 1A provides a perspective view of a first grinder member of a coffee grinder according to an example;
FIG. 1B provides a perspective view of a second grinder member of the coffee grinder;
FIG. 2 provides a flowchart of a method according to an example;
FIG. 3 provides an enlarged view of teeth of a grinder member according to an example; and
FIG. 4 provides a block diagram of a manufacturing assembly/process according to an example.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

Provided is a method for assembling a coffee grinder. The coffee grinder comprises a first grinder member and a second grinder member. When the coffee grinder is assembled, a grinding space is defined between the first and second grinder members in which beans are grindable. The method comprises assessing, prior to arranging the first grinder member and the second grinder member to define the grinding space, one of the first and second grinder members independently of the other of the first and second grinder members to determine at least one parameter relevant to a geometry of the grinder member being assessed. Subsequent arrangement of the first grinder member and the second grinder member to define the grinding space is based on the at least one parameter. Further provided is the coffee grinder per se, as well as a manufacturing assembly for manufacturing the coffee grinder.

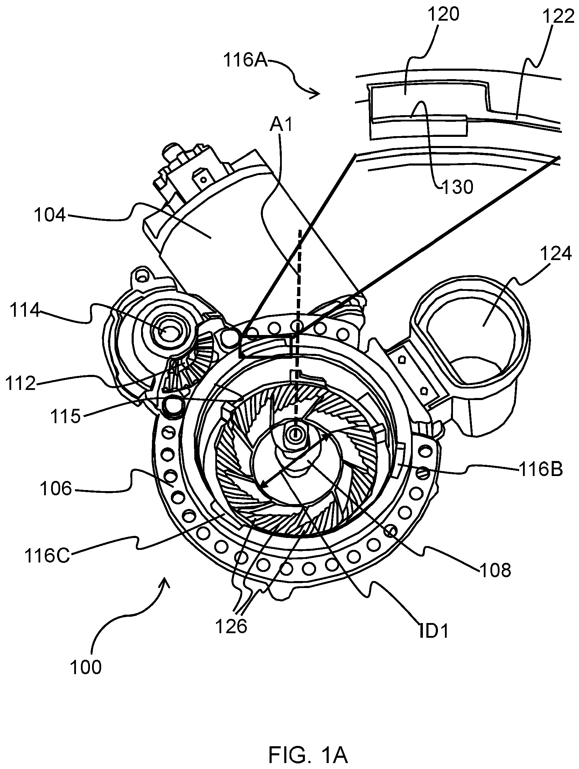

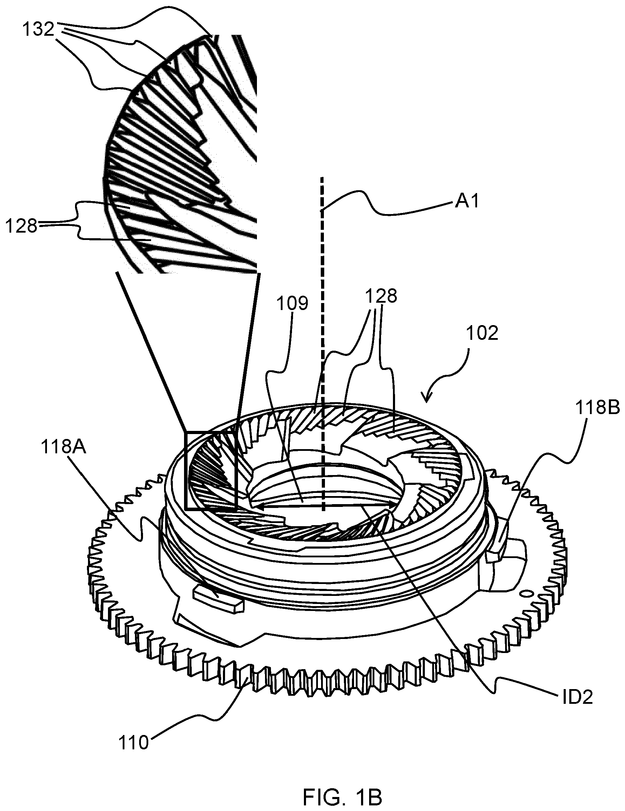

FIGs. 1A and 1B depict parts of a coffee grinder according to an example. In some embodiments, the coffee grinder is included, e.g. housed within, a coffee machine that further comprises coffee brewing apparatus, such as a pump for delivering water to coffee ground by the coffee grinder. Non-limiting examples of the coffee machine include a bean-to-cup coffee machine, a fully automatic espresso coffee machine or a hybrid coffee machine (including a manual espresso coffee machine with integrated grinder).

In other embodiments, the coffee grinder is a standalone coffee grinder, in other words a coffee grinder that is not included in such a coffee machine.

The coffee grinder comprises a first grinder member 100, as shown in FIG. 1A, and a second grinder member 102, as shown in FIG. 1B.

When the coffee grinder is assembled, a grinding space is defined between the first and second grinder members 100, 102. Beans, e.g. coffee beans, are grindable in the grinding space defined between the first and second grinder members 100, 102, as explained in more detail herein below.

The first and second grinder members 100, 102 can be regarded as grinding discs or grinder stones. In at least some embodiments, such as shown in FIGs. 1A and 1B, the first and second grinder members 100, 102 comprise, e.g. are in the form of, grinder burrs.

In such embodiments, the grinder burrs may be flat plate grinder burrs or conical grinder burrs. Particular mention is made of flat plate grinder burrs, as illustrated in FIGs. 1A and 1B.

The first and second grinder members 100, 102 can be formed from any suitable material. In some embodiments, the first and second grinder members 100, 102 are formed from a metallic material, such as a metal or metal alloy, a plastic material, and/or a ceramic material.

One of the first and second grinder members 100, 102 may be positioned above the other of the first and second grinder members 102, 100 when the coffee grinder is assembled and orientated for use. With reference to FIGs. 1A and 1B, the second grinder member 102 may be positioned above the first grinder member 100 when the coffee grinder is assembled and orientated for use.

In embodiments, such as shown in FIGs. 1A and 1B, in which the first and second grinder members 100, 102 are in the form of grinder burrs, the grinder burrs may be positioned one on top of the other. In alternative embodiments (not shown), when the coffee grinder is assembled and orientated for use, the first and second grinder members 110, 102 may have a horizontal orientation (instead of aforementioned vertical orientation).

Centers of the first and second grinder members 100, 102, e.g. grinder burrs, may be aligned with each other along an axis A1.

At least one of the first and second grinder members 100, 102, e.g. grinder burrs, may be drivable to grind beans, e.g. coffee beans, received within the grinding space against the other of the first and second grinder members 102, 100.

Rotation of at least one of the first and second grinder members 100, 102 may be driven, for example, about the axis A1 along which the centers of the first and second grinder members 100, 102 are aligned.

In some embodiments, such as shown in FIGs. 1A and 1B, the first, e.g. lower, grinder member 100 is driven, for example driven to rotate about the axis A1, while the second, e.g. upper, grinder member 102 remains static.

Driving of movement, e.g. rotation, of the first and/or second grinder members 100, 102 can be implemented in any suitable manner. In some embodiments, such as shown in FIG. 1A, rotation of the first grinder member 100 is driven by an electrical motor 104 included in the coffee grinder.

To this end, the first grinder member 100 may, for example, be constrained to a shaft extending along the axis A1, which shaft is itself constrained to a gear whose splines engage a worm gear driven by the motor 104.

The first grinder member 100 may be rotatably mounted in a seat 106. In such embodiments, the shaft may extend through an aperture defined in a bottom of the seat 106 to reach the first grinder member 100. The shaft may be supported by a bearing provided within the seat 106.

In some embodiments, such as shown in FIG. 1A, the motor 104 is arranged to drive movement, e.g. rotation, of a feeding member 108, for example an auger that extends from the shaft along the axis A1. The feeding member 108, e.g. auger, may assist to transport beans, e.g. coffee beans, into the grinding space.

In some embodiments, such as shown in FIG. 1B, the second grinder member 102 delimits an opening 109 through which beans may pass in order to enter the grinding space.

In such embodiments, the feeding member 108, e.g. auger, may facilitate feeding of beans supplied via the opening 109 into the grinding space.

A toothed portion 110, e.g. an annular toothed portion 110, may be fixed to the second grinder member 102. This toothed portion 110 may be engaged by a gear 112, e.g. a pinion, when the first and second grinder members 100, 102 are assembled to define the grinding space.

Rotation of the gear 112 by rotation of an adjustment member 114, e.g. an adjustment knob, coupled to the gear 112 may cause rotation of the toothed portion 110 and thus rotation of the second grinder member 102 about the axis A1. It is noted that the second grinder member 102 may nonetheless remain static, in other words is non-rotatable, while the first grinder member 100 is driven, e.g. driven to rotate, during grinding.

More generally, the coffee grinder is arranged to enable adjustment of an orientation of the first and second grinder members 100, 102 relative to each other at least during assembly of the coffee grinder.

Such orientation adjustment is implemented by rotation of the second (non-driven) grinder member 102 about the axis A1 relative to the first (driven) grinder member 100. This may, for instance, be implemented by rotating the adjustment member 114, e.g. adjustment knob, to cause rotation of the second grinder member 102 while the first grinder member 100 remains stationary.

It is also noted that rotation of the second grinder member 102 about the axis A1 relative to the first grinder member 100 can be implemented without such an adjustment member 114. In this respect, the coffee grinder may not necessarily include such an adjustment member 114, e.g. knob, in which case the coffee grinder may be calibrated via rotation of the second grinder member 102, e.g. top assembly, followed by fixing of the set up grinder members 100, 102 in position.

In some embodiments, the fixed or non-driven (here: second) grinder member 102 may be axially moveable along the axis A1. To this end, a thread-type coupling may be defined between the second (non-driven) grinder member 102 and a stationary bearing structure 115 which may for instance extend around the first (driven) grinder member 100, as shown in FIG. 1A.

In such embodiments, rotation of the second grinder member 102 in a first direction may cause the second grinder member 102 to move towards the first grinder member 100, and rotation of the second grinder member 102 in a second direction opposite to the first direction may cause the second grinder member 102 to move away from the first grinder member 100.

Orientation adjustment of the first and second grinder members 100, 102 relative to each other via rotation of the second grinder member 102 is accompanied by adjustment of a distance separating the first and second grinder members 100, 102 from each other.

In some embodiments, such as shown in FIGs. 1A and 1B, one or more first engagement members 116A, 116B, 116C arranged about the first grinder member 100 each engage with a respective second engagement member 118A, 118B, 118C (the latter not being visible in FIG. 1B) arranged about the second grinder member 102 to enable the first and second grinder members 100, 102 to be assembled to define the grinding space therebetween.

In such embodiments, the first and second engagement members 116A, 116B, 116C, 118A, 118B may define the above-mentioned thread-type coupling between the second grinder member 102 and the stationary bearing structure 115 extending around the first grinder member 100.

Referring to the inset of FIG. 1A, the first engagement member(s) 116A, 116B, 116C may each include a receiving portion 120, e.g. bayonet receiving portion 120, in which the second engagement member(s) 118A, 118B can each be located, and a groove portion 122 extending from the receiving portion 120.

In such embodiments, the groove portion 122 may extend with an axial component so that the second engagement member(s) 118A, 118B following the groove portion(s) 122 during rotation of the second grinder member 102 relative to the stationary bearing structure 115 causes axial movement of the second grinder member 102 along the axis A1.

Ground coffee exiting the grinding space defined between the first and second grinder members 100, 102 may pass to a ground coffee chute 124 via a ground coffee outlet. Such a ground coffee chute 124 may, for example, extend downwardly when the assembled coffee grinder is orientated for use. Altenatively or additionally, the ground coffee chute 124 may be arranged to enable the ground coffee to pass towards a brewing chamber, e.g. a brewing chamber to which water is pumped by the water pump mentioned above.

More generally, and irrespective of the adjustment of the distance between the first and second grinder members 100, 102 being combined with the orientation adjustment, the distance adjustment may determine a fineness of the ground coffee produced by the coffee grinder, e.g. may determine a grinder fineness setting.

Turning to the grinding-related features of the first and second grinder members 100, 102, e.g. grinder burrs, the first grinder member 100 may comprise first teeth 126 having surfaces that partly delimit the grinding space, and the second grinder member 102 may comprise second teeth 128 that partly delimit the grinding space. The first and second teeth 126, 128 may grind beans, e.g. coffee beans, in the grinding space defined therebetween.

The first teeth 126 may have a height that increases outwardly away from the center of the first grinder member 100, with the second teeth 128 similarly having a height that increases outwardly away from a center of the second grinder member 102. In this manner, the grinding space may generally taper away from a center of the assembled first and second grinder members 100, 102 to a minimum distance between the first and second teeth 126, 128 where the highest parts of the first teeth 126 oppose the highest parts of the second teeth 128.

Thus, beans, e.g. coffee beans, may be ground to a progressively finer powder outwardly away from the center of the assembled first and second grinder members 100, 102.

Achieving desired particle size, and in particular particle size distribution, of the ground product, e.g. coffee beans, may be dependent on assembling the first and second grinder members 100, 102 so as to minimize variation in spacing between the first and second grinder members 100, 102, and in particular to minimize variation in spacing between the respective highest parts of the first and second teeth 126, 128, that may otherwise lead to differences in particle size of the ground product, e.g. ground coffee, based on which part of the gap it has passed through.

Conventionally in-factory calibration of the coffee grinder in order to achieve the desired particle size and particle size distribution of the ground coffee involves grinding coffee beans to verify whether the coffee grinder is within specification, e.g. a specification comprising a given particle size distribution. However, using coffee beans to perform the calibration has various disadvantages. In particular, the use of coffee beans adds significant cost, waste and a relatively large carbon footprint to mass manufacturing of such coffee grinders. In this respect, vast quantities of coffee beans are conventionally shipped to manufacturers of coffee grinders for calibration purposes. Calibrating coffee grinders in an industrial setting, e.g. factory, using coffee beans may also create dust pollution and may be demanding in terms of space devoted to the coffee beans-based calibration in the setting.

Furthermore, careful cleaning of each coffee beans-calibrated coffee grinder may be required to remove coffee grounds therefrom to avoid the customer being supplied with a product they regard as having been pre-used. Traces of coffee grounds nonetheless tend to remain in the coffee grinder even after relatively thorough cleaning, e.g. involving vacuum cleaning the assembled coffee grinder.

One possibility that may obviate the need for coffee beans when calibrating the coffee grinder may involve assessing the grinding space between the first and second grinder members 100, 102 when the coffee grinder is assembled. However, this may necessitate an opening being provided in the grinder housing through which the grinding space can be assessed, e.g. measured. Such an opening may necessitate detachment of the chute 124, or an additional opening may be needed. The latter may complicate the design of the coffee grinder and may provide an outlet through which ground coffee may escape and pollute an area around the coffee grinder, for example an interior of a coffee machine in which the coffee grinder is arranged.

A further possibility may be to employ a technique that involves reducing the distance between the first and second grinder members 100, 102 until the first and second grinder members 100, 102 make contact with each other, and assessing whether the first and second grinder members 100, 102 uniformly contact each other around a circumference of the first and second grinder members 100, 102. However, the time-consuming nature of this approach, which may tend to involve assembly and disassembly of the coffee grinder, may be inappropriate for mass manufacturing. Moreover, bringing the first and second grinder members 100, 102 into contact with each other may risk causing damage to one or both of the grinder members 100, 102.

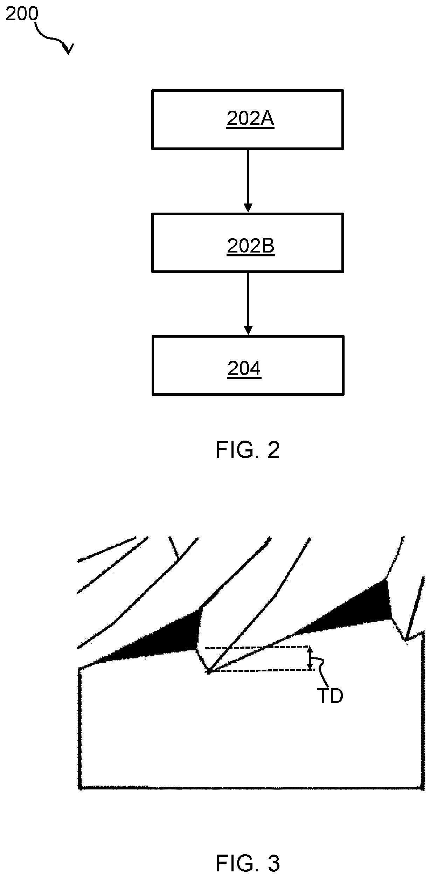

For these reasons, and referring now to the flowchart shown in FIG. 2, the present disclosure provides a method 200 for assembling a coffee grinder, e.g. the coffee grinder according to any of the embodiments described herein, that may obviate use of a grindable product, e.g. coffee beans, for calibrating the coffee grinder. The method 200 may also avoid specific design adjustments for assessing the grinding space between the first and second grinder members 100, 102 of the assembled coffee grinder, whilst also minimizing the possibility of damage to the first and second grinder members 100, 102 and manufacturing throughput issues.

The method 200 comprises assessing 202A the first grinder member 100 independently of the second grinder member 102 to determine at least one first parameter relevant to a geometry of the first grinder member 100. Alternatively or additionally, the method 200 comprises assessing 202B the second grinder member 102 independently of the first grinder member 100 to determine at least one second parameter relevant to a geometry of the second grinder member 102.

The terms "assessing" and "assessment" in this context may refer to quality control analysis of the respective manufactured grinder member 100, 102, with this quality control analysis being performed prior to arranging 204, in other words assembling, the first grinder member 100 and the second grinder member 102 to define the grinding space.

It is noted that in embodiments, such as shown in FIG. 2, in which both the first and second grinder members 100, 102 are assessed 202A, 202B, the assessment 202A of the first grinder member 100 may be implemented prior to (as shown in FIG. 2), simultaneously with, or after the assessment 202B of the second grinder member 102.

The assessment 202A, 202B of one of the first and second grinder members 100, 102 being implemented independently of the other of the first and second grinder members 102, 100 may mean that the first and second grinder members 100, 102 are separate from each other throughout the assessment 202A, 202B, thereby excluding, for example, temporary assembly/disassembly of the first and second grinder members 100, 102 for the purpose of performing the assessment 202A, 202B.

Arranging 204 the first grinder member 100 and the second grinder member 102 to define the grinding space is then based on the first parameter(s) and/or the second parameter(s) already determined in step 202A and/or step 202B.

Basing the assembly of the first and second grinder members 100, 102 on the pre-determined first parameter(s) and/or second parameter(s) may obviate the need for calibrating the coffee grinder using a grindable product, e.g. coffee beans, with concomitant decrease in manufacturing cost, carbon footprint, and contamination of the assembled coffee grinder. Indeed, in some embodiments the method 200 does not include grinding of a product, e.g. coffee beans.

In some embodiments, the method 200 comprises identifying the first grinder member 100 and/or the second grinder member 102 as being within specification based on the first parameter(s) and the second parameter(s) respectively.

Grinder members that are identified as being outside specification may not be used in the arranging 204 step of the method 200.

In other words, grinder members, e.g. grinder burrs/stones, identified to be out of specification may be identified prior to the coffee grinder being assembled 204, and thus such grinder members may be removed at a relatively early stage in the manufacturing process.

This by itself may assist to ensure that the assembled coffee grinder is suitably calibrated because out-of-specification grinder members may not be used to assemble 204 the coffee grinder.

The arranging 204 the first grinder member 100 and the second grinder member 102 to define the grinding space comprises adjusting an orientation of the first and second grinder members 100, 102 relative to each other based on the first parameter(s) and/or the second parameter(s).

Such orientation adjustment based on the first parameter(s) and/or the second parameter(s) may obviate the need for calibration of the coffee grinder using a grindable product, e.g. coffee beans. In embodiments in which the method 200 does not include grinding such a product, e.g. coffee beans, the method 200 may accordingly not involve adjusting the orientation of the first and second grinder members 100, 102 based on such grinding of the product, e.g. based on a particle size distribution of ground product, e.g. ground coffee resulting from such grinding.

Referring again to FIGs. 1A and 1B, one of the first and second grinder members 100, 102 is a fixed grinder member 102 whose position is fixed during grinding of the beans, and the other of the first and second grinder members 100, 102 is a driven grinder member 100 drivable to grind the beans against the fixed grinder member 102.

It is noted, for the avoidance of any doubt, that the fixed grinder member 102 may correspond to the second grinder member 102, and the driven grinder member 100 may correspond to the first grinder member 100 described above in relation to FIGs. 1A and 1B.

In such embodiments, the adjusting of the orientation of the first and second grinder members 100, 102 relative to each other comprises moving the fixed grinder member 102 while the driven grinder member 100 remains static.

The adjusting the orientation of the fixed grinder member 102 comprises rotating the fixed grinder member 102 about the axis A1 about which the driven grinder member 100 is rotated during grinding, while the driven grinder member 100 remains static. Such adjustment may be implemented, for example, by rotation of the adjustment member 114, e.g. adjustment knob, in order to cause rotation of the toothed portion 110 and thus the fixed grinder member 102 about the axis A1.

More generally, the adjusting the orientation of the first and second grinder members 100, 102 relative to each other may comprise minimizing a variation in a distance across a gap defined between the first and second grinder members 100, 102 based on the at least one first parameter and the at least one second parameter.

For example, should the first parameter(s) be indicative of the first grinder member 100 having a first higher portion and a first lower portion, and the second parameter(s) be indicative of the second grinder member 102 having a second higher portion and a second lower portion, the minimizing of the variation in the distance across the gap defined between the first and second grinder members 100, 102 may comprise aligning the first higher portion of the first grinder member 100 opposite the second lower portion of the second grinder member 102. In so doing, the first lower portion of the first grinder member 100 may also be aligned with the second higher portion of the second grinder member 102.

This may minimize variation in the distance between the first and second grinder members 100, 102 because a higher portion of one of the first and second grinder members 100, 102 that may otherwise reduce the distance across the gap may be compensated by alignment opposite a lower portion of the other of the first and second grinder members 102, 100.

In such an example, the adjusting the orientation of the first and second grinder members 100, 102 relative to each may comprise rotating the fixed grinder member 102 about the axis A1, e.g. by rotating the adjustment member 114, until the first higher portion of the first grinder member 100 identified in step 202A opposes the second lower portion of the second grinder member 102 identified in step 202B.

More generally, the distance across the gap whose variation is minimized may be a minimum distance across the gap where the first and second grinder members 100, 102 most closely approach each other. In such embodiments, the minimum distance may be between highest parts of the first teeth 126 and highest parts of the second teeth 128.

In some embodiments, the method 200 comprises selecting the first grinder member 100 from a plurality of first grinder members 100 based on the at least one first parameter and/or selecting the second grinder member 102 from a plurality of second grinder members 102 based on the at least one second parameter.

In such embodiments, one or both of the first and second grinder members 100, 102 may be selected based on their geometry in order to minimize variation in the distance across the gap defined between the first and second grinder members 100, 102.

The plurality of first grinder members 100 and the plurality of second grinder members 102 may be used to generate a plurality of pairs of the first grinder member 100 and the second grinder member 102 based on the at least one first parameter and the at least one second parameter. Such pairs may, for example, be defined in such a way as to enable minimizing of variation in the distance across the gap defined between the first and second grinder members 100, 102 of each pair across the plurality of pairs.

Once the pairs have been generated, the first grinder member 100 and the second grinder member 102 of each pair may be arranged to define the grinding space therebetween, with this arranging comprising adjusting the orientation of the first and second grinder members 100, 102 relative to each other, as previously described.

Accordingly, the method 200 may be applied to identify pairs of grinder members 100, 102, e.g. grinder stones, with complementary parameter(s), e.g. specifications.

Such complementary parameter(s), e.g. specifications, may assist in ensuring that the first and second grinder members 100, 102 that are arranged 204 to define the grinding space therebetween are an optimal match.

The first parameter(s) may be any suitable parameter(s) provided that it has, or they have, relevance to the geometry of the first grinder member 100. In some embodiments, assessing 202A the first grinder member 100 to determine the first parameter(s) comprises defining a first measurement plane, e.g. a best fit first measurement plane, that includes top surfaces of the first grinder member 100. Such top surfaces may, for example, correspond to the highest parts of the first teeth 126.

The above-mentioned best fit first measurement plane may be defined using, for example, all top surfaces of the first grinder member 100, such as the highest parts of all (here: 72) first teeth 126 in the case of the non-limiting example shown in FIG. 1A.

In some embodiments, the assessing 202A the first grinder member 100 to determine the first parameter(s) further comprises defining a first reference plane, e.g. a best fit first reference plane, against which the first measurement plane may be compared.

Any suitable surface may be used to define the first reference plane provided that the surface enables reliable and repeatable comparison to be made with the first measurement plane. In some embodiments, and referring again to FIG. 1A, the first reference plane includes a surface 130 of the first engagement member(s) 116A, 116B, 116C, for example a surface 130 of the receiving portion(s) 120, e.g. bayonet receiving portion(s) 120.

The assessing 202A the first grinder element 100 to determine the first parameter(s) may include measuring an angle between the first measurement plane and the first reference plane. In other words, the first parameter(s) may include the angle between the first measurement plane and the first reference plane.

Alternatively or additionally, the assessing 202A the first grinder member 100 to determine the first parameter(s) may include measuring a distance between the planes, e.g. along the axis A1 and/or between center points in the respective planes based on a first inner diameter ID1 of the first grinder member 100.

Alternatively or additionally, the assessing 202A the first grinder member 100 to determine the first parameter(s) may include determining a first teeth depth statistic. The first teeth depth statistic may include, e.g. be, a first average teeth depth and/or a standard deviation of the first teeth depth.

It is noted that the standard deviation of the first teeth depth may be regarded as an indicator of flatness of the first teeth 126.

Referring to FIG. 3, measuring the average first teeth depth may comprise measuring the tooth depth TD of each individual tooth of the first teeth 126 along the axis A1, e.g. in a vertical direction, and determining the average, e.g. mean, and/or standard deviation using the measured tooth depths TD.

More generally, the first parameter(s) may comprise at least one first teeth parameter, e.g. the first teeth depth statistic, relevant to a geometry of the first teeth 126 of the first grinder member 100. In such embodiments, the adjusting of the orientation of the first and second grinder members 100, 102 relative to each other may be based on the first teeth parameter(s).

The second parameter(s) may be any suitable parameter(s) provided that it has, or they have, relevance to the geometry of the second grinder member 102. In some embodiments, assessing 202B the second grinder member 102 to determine the second parameter(s) comprises defining a second measurement plane, e.g. a best fit second measurement plane, that includes top surfaces 132 of the second grinder member 102. Such top surfaces 132 may, for example, correspond to the highest parts of the second teeth 128.

The above-mentioned best fit second measurement plane may be defined using, for example, all top surfaces of the second grinder member 102, such as the highest parts of all (here: 72) second teeth 128 in the case of the non-limiting example shown in FIG. 1B.

In such embodiments, the assessing 202B the second grinder member 102 to determine the second parameter(s) may further comprise defining a second reference plane, e.g. a best fit second reference plane, against which the second measurement plane may be compared.

Any suitable surface may be used to define the second reference plane provided that the surface enables reliable and repeatable comparison to be made with the second measurement plane. In some embodiments, and referring again to FIG. 1B, the second reference plane includes a surface of the second engagement member(s) 118A, 118B.

The assessing 202B the second grinder member 102 to determine the second parameter(s) may include measuring an angle between the second measurement plane and the second reference plane. In other words, the second parameter(s) may include the angle between the second measurement plane and the second reference plane.

Alternatively or additionally, the assessing 202B the second grinder member 102 to determine the second parameter(s) may include measuring a distance between the planes, e.g. along the axis A1 and/or between center points in the respective planes based on a second inner diameter ID2 of the second grinder member 102.

Alternatively or additionally, the assessing 202B the second grinder member 102 to determine the second parameter(s) may include determining a second teeth depth statistic. The second teeth depth statistic may include, e.g. be, a second average teeth depth and/or a standard deviation of the second teeth depth.

It is noted that the standard deviation of the second teeth depth may be regarded as an indicator of flatness of the second teeth 128.

Referring again to FIG. 3, measuring the average second teeth depth may comprise measuring the tooth depth TD of each individual tooth of the second teeth 128 along the axis A1, e.g. in a vertical direction, and determining the average, e.g. mean, and/or standard deviation using the measured tooth depths TD.

More generally, the second parameter(s) may comprise at least one second teeth parameter, e.g. the second teeth depth statistic, relevant to a geometry of the second teeth 128 of the second grinder member 102. In such embodiments, the adjusting of the orientation of the first and second grinder members 100, 102 relative to each other may be based on the second teeth parameter(s).

Table 1 summarizes assessment of the first and second grinder members 100, 102 according to an illustrative non-limiting example.

**Table 1**

| Geometrical analysis ID | Geometrical analysis description | First and second parameters relevant to geometry ID | First and second parameters relevant to geometry description |
|---|---|---|---|
| G1A | Best fit first reference plane, e.g. on bayonet surfaces 130 | O1A | Distance between first reference plane and first measurement plane as measured between center points |
| G2A | Best fit first measurement plane, e.g. first grinder | O2A | Angle between first reference plane and |
| | member 100 top surfaces | | first measurement plane |
| G3A | Center point of first grinder member 100 | O3A | Average depth of first teeth 126 |
| G4A | Teeth depth of first grinder member 100 | O4A | Standard deviation of tooth depth for first teeth 126, e.g. measure of flatness |
| G1B | Best fit second reference plane, e.g. on bayonet surfaces of second engagement members 118A, 118B | O1B | Distance between second reference plane and second measurement plane as measured between center points |
| G2B | Best fit second measurement plane, e.g. second grinder member's 102 top surfaces 132 | O2B | Angle between second reference plane and second measurement plane |
| G3B | Center point of second grinder member 102 | O3B | Average depth of second teeth 128 |
| G4B | Teeth depth of second grinder member 102 | O4B | Standard deviation of tooth depth for second teeth 128, e.g. measure of flatness |

The assessment 202A, 202B of the first and/or second grinder members 100, 102 to determine the first and/or second parameter(s) may be implemented in any suitable manner. In at least some embodiments, the respective grinder member 100, 102 may be stationary while the assessment 202A, 202B is being performed.

In some embodiments, the assessment 202A, 202B comprises optically measuring the at least one first parameter and/or the at least one second parameter. Such optical measurement may be readily implementable in a manufacturing setting, e.g. a factory, in which the coffee grinder is assembled.

In such embodiments, the first reference plane and the first measurement plane of the first grinder member 100 may be optically identified, for example via laser scanning, thereby enabling the distance between the first reference plane and the first measurement plane and/or the angle between the first reference plane and the first measurement plane to be determined.

Alternatively or additionally, the second reference plane and the second measurement plane of the second grinder member 102 may be optically identified, for example via laser scanning, thereby enabling the distance between the second reference plane and the second measurement plane and/or the angle between the second reference plane and the second measurement plane to be determined.

Such optical measurement may be performed from any suitable direction or directions, since the first and second grinder members 100, 102 are separate from each other during the optical measurement. In some embodiments, the optical measurement is performed along the axial direction A1.

In some embodiments, the optical measuring of the first parameter(s) and/or the second parameter(s) comprises using a 3D scanner, e.g. an optical profilometer.

A commercially available example of an optical profilometer is the VR-6000 series 3D optical profilometer from Keyence Corporation.

More generally, the geometrical analysis can be implemented in any suitable manner, in other words not only by optical measurement.

It is noted that the assessment of the first and/or second grinder members 100, 102 to determine the first and/or second parameter(s) may be implemented in any suitable order. For example, a first step may comprise determining the teeth parameter, e.g. the teeth depth statistic, relevant to a geometry of the teeth 126, 128 of the first grinder member 100 and/or the second grinder member 102. This may involve determining the average teeth depth and/or a standard deviation of the teeth depth of the first teeth 126 and/or the second teeth 128.

In this first step, parallelism of surfaces of the first grinder member 100 and/or the second grinder member 102 may not be taken into account. Rather, the first and/or second grinder members may be selected on the basis of the teeth parameter(s), e.g. teeth depth statistic.

In a second step, optical measurement of the first grinder member 100 and/or the second grinder member 102 may be implemented, for example using the optical profilometer, such as the VR-6000 mentioned above.

In this second step, the reference and measurement planes may be identified. The center points may also be identified, e.g. optically identified via a segmentation approach that identifies the inner diameter ID1, ID2 of the respective grinder member 100, 102.

In this second step, an inner circle having a defined diameter, e.g. 47 mm, may, for instance, be employed for profile measurement of the respective teeth 126, 128, with an outer circle having a defined diameter, e.g. 62 mm, being employed for profile measurement on the respective engagement member(s) 116A, 116B, 116C; 118A, 118B, e.g. bayonet surface(s).

A center of the body of the respective grinder member 100, 102 may be defined, for example via obtaining a height of the body approximated as a cylinder.

The center of each grinder stone may also be determined, e.g. based on image/contrast analysis and/or based on height analysis.

In a third step, the first and/or second parameter(s) is or are obtained by processing the data gathered during, in particular, the second step. The processing may be implemented using a script configured to process the data, for example to process optical data from the 3D scanner, e.g. optical profilometer.

It is reiterated that the arranging 204 of the first grinder member 100 and the second grinder member 102 to define the grinding space is based at least on the first parameter(s) relevant to a geometry of the first grinder member 100 and/or on the second parameter(s) relevant to a geometry of the second grinder member 102.

In some embodiments, the method 200 comprises defining a predicted particle size distribution, e.g. a D[4;3], of the ground product, e.g. ground coffee, deliverable by the coffee grinder based on the first and/or second parameter(s).

In such embodiments, a function, e.g. a transfer function, may be used to determine the predicted particle size distribution based on the first and/or second parameter(s).

Such a function, e.g. transfer function, may alternatively or additionally be used to adjust, based on the at least one first parameter and/or the at least one second parameter, the orientation of the first and second grinder members 100, 102 relative to each other.

The transfer function may be derived using a routine design of experiments (DoE) approach that identifies the influence of the first and/or second parameter(s), such as those listed in Table 1 above, on particle size distribution, e.g. D[4;3], of ground product, e.g. ground coffee, prepared using a sample of coffee grinders used for the DoE. For example, the DoE may determine influence of such first and/or second parameter(s) on whether or not a specified particle size distribution, e.g. D[4;3] = 500±80 µm, is achieved.

Such a DoE approach may thus enable prediction, without the use of a grindable product, e.g. coffee beans, in the manufacturing setting, of whether the coffee grinder assembled using a given first grinder member 100 and a given second grinder member 102 will be within specification.

By means of geometrical analysis of the grinding module, the function, e.g. transfer function, may be developed that predicts a setpoint to have the coffee grinder calibrated to a specification/requirement.

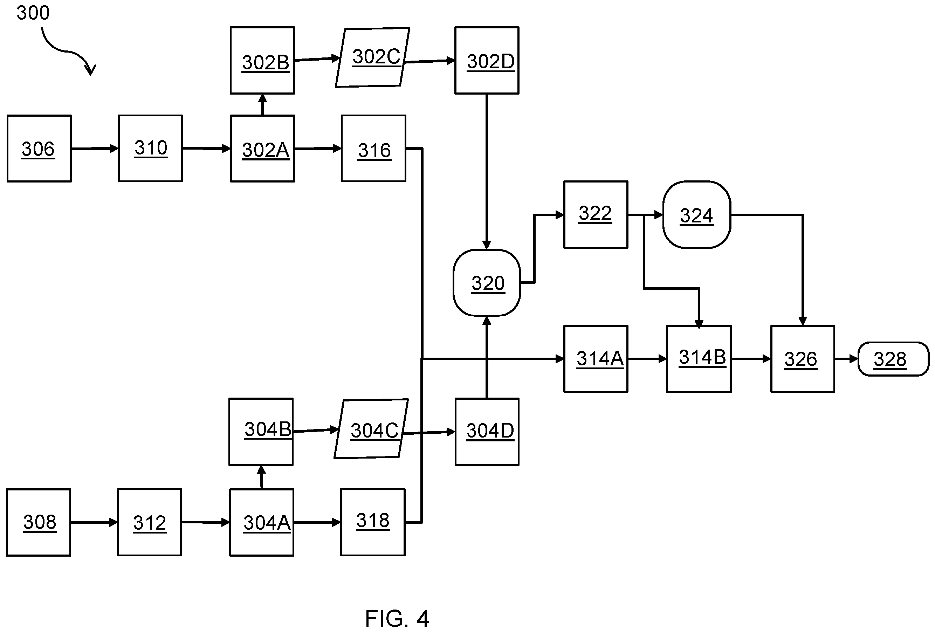

FIG. 4 provides a block diagram of a manufacturing assembly 300/process according to an example. The manufacturing assembly 300 comprises an assessment stage 302A-D, 304A-D configured to enable assessment of, prior to arranging the first grinder member 100 and the second grinder member 102 to define the grinding space, the first grinder member 100 independently of the second grinder member 102 to determine at least one first parameter relevant to a geometry of the first grinder member 100. Alternatively or additionally, the assessment stage 302A-D, 304A-D is configured to enable assessment of, prior to arranging the first grinder member 100 and the second grinder member 102 to define the grinding space, the second grinder member 102 independently of the first grinder member 100 to determine at least one second parameter relevant to a geometry of the second grinder member 102.

Block 306 represents manufacture, e.g. assembly, of the first grinder member 100, in other words a first manufacturing stage 306 of the manufacturing assembly 300 at which the first grinder member 100 is manufactured. Block 308 represents manufacture, e.g. assembly, of the second grinder member 102, in other words a second manufacturing stage 308 of the manufacturing assembly 300 at which the second grinder member 102 is manufactured.

In some embodiments, such as shown in FIG. 4, the manufactured, e.g. assembled, first grinder member 100 is transported, e.g. via a conveyor, in block 310. This may be regarded as a first transportation stage 310 of the manufacturing assembly 300.

Similarly, the manufactured, e.g. assembled, second grinder member 102 may be transported, e.g. via a conveyor, in block 312. This may be regarded as a second transportation stage 312 of the manufacturing assembly 300.

Upon reaching the assessment stage 302A-D, 304A-D, the first grinder member 100 may be scanned at blocks 302A and 302B, for example by travelling across a 3D scanner at block 302A and the geometry scanning taking place at block 302B. Similarly, the second grinder member 102 may be scanned at blocks 304A and 304B, for example by travelling across a 3D scanner at block 304A and the geometry scanning taking place at block 304B.

In more general terms, the assessment stage 302A-D, 304A-D may be configured to measure, e.g. perform a 3D measurement of, the first grinder member 100 and/or the second grinder member 102 in any suitable manner. In some embodiments, the assessment stage 302A-D, 304A-D is configured to optically measure, e.g. via 3D scanning, the first grinder member 100 and/or the second grinder member 102.

With continued reference to FIG. 4, three-dimensional geometry of the first grinder member 100 and the first grinder member's 100 interface that partly delimits the grinding space may be determined at block 302C, with the geometry analysis to determine the first parameter(s) being implemented at block 302D.

Similarly, three-dimensional geometry of the second grinder member 102 and the second grinder member's 102 interface that partly delimits the grinding space may be determined at block 304C, with the geometry analysis to determine the second parameter(s) being implemented at block 304D.

The manufacturing assembly 300 comprises assembly stage 314A, 314B at which the first grinder member 100 and the second grinder member 102 are arranged to define the grinding space based on the at least one first parameter and/or the at least one second parameter.

It is noted that prior to the assembly stage 314A, 314B, the first grinder member 100 may be removed from its conveyer, at block 316. The second grinder member 102 may also be removed from its conveyer, at block 318.

As shown in FIG. 4, the assembly stage 314A, 314B comprises an initial assembly stage 314A at which the first grinder member 100 and the second grinder member 102 are combined, e.g. coupled, for instance by the first engagement member(s) 116A, 116B, 116C engaging with the second engagement member(s) 118A, 118B.

The assembly stage 314A, 314B further comprises a subsequent assembly stage 314B in which the orientation of the first and second grinder members 100, 102 relative to each other is adjusted based on the at least one first parameter and/or the at least one second parameter.

To this end, the geometry analysis from blocks 302D and 304D may be applied in a function, e.g. transfer function, at block 320. An output of the function may then be used at block 322 to calculate, for example, a rotational position of the fixed grinder member 102 based on the at least one first parameter and/or the at least one second parameter. This calculation may minimize variation in the distance across the gap defined between the first and second grinder members 100, 102, as previously described.

In such embodiments, the subsequent assembly stage 314B may be configured to adjust or enable adjustment of the rotational angle of the fixed grinder member 102, e.g. via manipulation of the adjustment member 114, according to the output of the calculation at block 322.

In some embodiments, the output of the calculation at block 322, in other words the rotational position of the fixed grinder 102, may be stored in production database at block 324. Alternatively or additionally, the output of the calculation at block 322 may be encoded in a coffee grinder identification applied to, e.g. marked on, the coffee grinder at block 326.

In this manner, the manufacturer and/or the customer may be enabled to revert to a factory calibration of the coffee grinder using the thus recorded rotational position of the fixed grinder 102.

Manufacture/assembly of the coffee grinder is complete at block 328.

In some embodiments, such as shown in FIG. 4, no coffee beans calibration stage that uses a grindable product, e.g. coffee beans, to calibrate the coffee grinder may be included in the manufacturing assembly 300.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

The mere fact that certain measures are recited in mutually different dependent claims does not indicate that a combination of these measures cannot be used to advantage.

If the term "adapted to" is used in the claims or description, it is noted the term "adapted to" is intended to be equivalent to the term "configured to".

Any reference signs in the claims should not be construed as limiting the scope.

## Claims

1. A method (200) for assembling a coffee grinder comprising a first grinder member (100) and a second grinder member (102), a grinding space being defined between the first and second grinder members in which beans are grindable, wherein one of the first and second grinder members (100, 102) is a fixed grinder member (102) whose position is fixed during grinding of the beans, the other of the first and second grinder members being a driven grinder member (100) drivable to grind the beans against the fixed grinder member, the method comprising:
using measurement equipment to assess (202A), prior to arranging the first grinder member and the second grinder member to define the grinding space, the first grinder member independently of the second grinder member to determine at least one first parameter relevant to a geometry of the first grinder member; and/or
using measurement equipment to assess (202B), prior to arranging the first grinder member and the second grinder member to define the grinding space, the second grinder member independently of the first grinder member to determine at least one second parameter relevant to a geometry of the second grinder member, wherein the method further comprises:
arranging (204), based on the at least one first parameter and/or the at least one second parameter, the first grinder member and the second grinder member to define the grinding space, wherein the arranging comprises adjusting, based on the at least one first parameter and/or the at least one second parameter, an orientation of the first and second grinder members (100, 102) relative to each other, the adjusting of the orientation of the first and second grinder members relative to each other comprising rotating the fixed grinder member about an axis (A1) about which the driven grinder member is driven to rotate during said grinding, while the driven grinder member remains static, the rotation of the fixed grinder member being accompanied by adjustment of a distance separating the first and second grinder members from each other.

2. The method (200) according to claim 1, wherein the adjusting the orientation of the first and second grinder members (100, 102) relative to each other comprises minimizing a variation in a distance across a gap defined between the first and second grinder members based on the at least one first parameter and the at least one second parameter.

3. The method (200) according to claim 2, wherein the distance is a minimum distance across the gap where the first and second grinder members (100, 102) most closely approach each other.

4. The method (200) according to any one of claims 1 to 3, comprising defining a predicted particle size distribution of a ground product deliverable by the coffee grinder based on the first and/or second parameter(s).

5. The method (200) according to any one of claims 1 to 4, wherein the first grinder member (100) comprises first teeth (126) having surfaces that partly delimit the grinding space, the at least one first parameter comprising at least one first teeth parameter relevant to a geometry of the first teeth.

6. The method (200) according to any one of claims 1 to 5, wherein the second grinder member (102) comprises second teeth (128) having surfaces that partly delimit the grinding space, the at least one second parameter comprising at least one second teeth parameter relevant to a geometry of the second teeth.

7. The method (200) according to any one of claims 1 to 6, wherein the assessing comprises 3D measurement of the first grinder member (100) and/or the second grinder member (102).

8. The method (200) according to any one of claims 1 to 7, wherein the assessing comprises optical measurement of the first grinder member and/or the second grinder member.

9. The method (200) according to any one of claims 1 to 8, comprising selecting the first grinder member (100) from a plurality of first grinder members based on the at least one first parameter and/or selecting the second grinder member (102) from a plurality of second grinder members based on the at least one second parameter.

10. The method (200) according to any one of claims 1 to 9, wherein the method does not include grinding a product using the coffee grinder during manufacture of the coffee grinder.

11. A manufacturing assembly (300) for assembling a coffee grinder, which coffee grinder comprises a first grinder member (100) and a second grinder member (102), a grinding space being defined between the first and second grinder members in which beans are grindable, wherein one of the first and second grinder members (100, 102) is a fixed grinder member (102) whose position is fixed during grinding of the beans, the other of the first and second grinder members being a driven grinder member (100) drivable to grind the beans against the fixed grinder member, the manufacturing assembly comprising:
an assessment station (302A-D, 304A-D), the assessment station comprising measurement equipment configured to:
assess, prior to arranging the first grinder member and the second grinder member to define the grinding space, the first grinder member independently of the second grinder member to determine at least one first parameter relevant to a geometry of the first grinder member; and/or
assess, prior to arranging the first grinder member and the second grinder member to define the grinding space, the second grinder member independently of the first grinder member to determine at least one second parameter relevant to a geometry of the second grinder member, and
an assembly station (314A, 314B) at which the first grinder member and the second grinder member are arranged to define the grinding space based on the at least one first parameter and/or the at least one second parameter, wherein the assembly station comprises an initial assembly stage (314A) at which the first grinder member and the second grinder member are combined; and a subsequent assembly stage (314B) at which an orientation of the first and second grinder members (100, 102) relative to each other is adjusted, based on the at least one first parameter and/or the at least one second parameter, by rotation of the fixed grinder member about an axis (A1) about which the driven grinder member is driven to rotate during said grinding, while the driven grinder member remains static, the rotation of the fixed grinder member being accompanied by adjustment of a distance separating the first and second grinder members from each other.

12. The manufacturing assembly (300) according to claim 11, wherein the measurement equipment is configured to perform a 3D measurement of the first grinder member (100) and/or the second grinder member (102).

13. The manufacturing assembly (300) according to claim 11 or claim 12, wherein the measurement equipment is configured to optically measure the first grinder member (100) and/or the second grinder member (102).

## Patentansprüche

1. Verfahren (200) zum Zusammenbau einer Kaffeemühle, die ein erstes Mahlelement (100) und ein zweites Mahlelement (102) umfasst, wobei zwischen dem ersten und zweiten Mahlelement ein Mahlraum definiert ist, in dem Bohnen gemahlen werden können, wobei eines des ersten und zweiten Mahlelements (100, 102) ein feststehendes Mahlelement (102) ist, dessen Position während des Mahlvorgangs fixiert ist, das andere des ersten und zweiten Mahlelements ein angetriebenes Mahlelement (100) ist, das angetrieben werden kann, um die Bohnen gegen das feststehende Mahlelement zu mahlen, wobei das Verfahren umfasst:
unter Verwendung von Messausrüstung zum Beurteilen (202A), vor Anordnen des ersten Mahlelements und des zweiten Mahlelements, um den Mahlraum zu definieren, des ersten Mahlelements unabhängig vom zweiten Mahlelement, um mindestens einen ersten Parameter zu bestimmen, der für eine Geometrie des ersten Mahlelements relevant ist; und/oder
unter Verwendung von Messausrüstung zum Beurteilen (202B), vor Anordnen des ersten Mahlelements und des zweiten Mahlelements, um den Mahlraum zu definieren, des zweiten Mahlelements unabhängig vom ersten Mahlelement, um mindestens einen zweiten Parameter zu bestimmen, der für eine Geometrie des zweiten Mahlelements relevant ist, wobei das Verfahren ferner umfasst:
Anordnen (204), basierend auf dem mindestens einen ersten Parameter und/oder dem mindestens einen zweiten Parameter, des ersten Mahlelements und des zweiten Mahlelements, um den Mahlraum zu definieren, wobei das Anordnen Anpassen, basierend auf dem einen ersten Parameter und/oder dem mindestens einen zweiten Parameter, einer Ausrichtung des ersten und zweiten Mahlelements (100, 102) relativ zueinander umfasst, wobei das Anpassen der Ausrichtung des ersten und zweiten Mahlelements relativ zueinander Drehen des feststehenden Mahlelements um eine Achse (A1) umfasst, um die das angetriebene Mahlelement angetrieben wird, um sich während des Mahlvorgangs zu drehen, während das angetriebene Mahlelement statisch bleibt, wobei die Drehung des feststehenden Mahlelements mit einer Anpassung eines Abstands zwischen dem ersten und zweiten Mahlelement einhergeht.

2. Verfahren (200) nach Anspruch 1, wobei das Anpassen der Ausrichtung des ersten und zweiten Mahlelements (100, 102) relativ zueinander ein Minimieren einer Abweichung eines Abstands über einen zwischen dem ersten und zweiten Mahlelement definierten Spalt basierend auf dem mindestens einen ersten Parameter und dem mindestens einen zweiten Parameter umfasst.

3. Verfahren (200) nach Anspruch 2, wobei der Abstand ein minimaler Abstand über den Spalt ist, bei dem sich das erste und zweite Mahlelement (100, 102) am nächsten kommen.

4. Verfahren (200) nach einem der Ansprüche 1 bis 3, umfassend Definieren einer vorhergesagten Partikelgrößenverteilung eines vom Kaffeemahlwerk auszugebenden Mahlguts basierend auf dem (den) ersten und/oder zweiten Parameter(n).

5. Verfahren (200) nach einem der Ansprüche 1 bis 4, wobei das erste Mahlelement (100) erste Zähne (126), die Flächen aufweisen, umfasst, die den Mahlraum teilweise abgrenzen, wobei der mindestens eine erste Parameter mindestens einen ersten Zahnparameter umfasst, der für eine Geometrie der ersten Zähne relevant ist.

6. Verfahren (200) nach einem der Ansprüche 1 bis 5, wobei das zweite Mahlelement (102) zweite Zähne (128), die Flächen aufweisen, umfasst, die den Mahlraum teilweise abgrenzen, wobei der mindestens eine zweite Parameter mindestens einen zweiten Zahnparameter umfasst, der für eine Geometrie der zweiten Zähne relevant ist.

7. Verfahren (200) nach einem der Ansprüche 1 bis 6, wobei das Beurteilen eine 3D-Messung des ersten Mahlelements (100) und/oder des zweiten Mahlelements (102) umfasst.

8. Verfahren (200) nach einem der Ansprüche 1 bis 7, wobei das Beurteilen eine optische Messung des ersten Mahlelements und/oder des zweiten Mahlelements umfasst.

9. Verfahren (200) nach einem der Ansprüche 1 bis 8, umfassend Auswählen des ersten Mahlelements (100) aus einer Vielzahl von ersten Mahlelementen basierend auf dem mindestens einen ersten Parameter und/oder Auswählen des zweiten Mahlelements (102) aus einer Vielzahl von zweiten Mahlelementen basierend auf dem mindestens einen zweiten Parameter.

10. Verfahren (200) nach einem der Ansprüche 1 bis 9, wobei das Verfahren kein Mahlen eines Produkts unter Verwendung der Kaffeemühle während einer Fertigung der Kaffeemühlen beinhaltet.

11. Fertigungsbaugruppe (300) zum Zusammenbau einer Kaffeemühle, wobei die Kaffeemühle ein erstes Mahlelement (100) und ein zweites Mahlelement (102) umfasst, wobei zwischen dem ersten und zweiten Mahlelement ein Mahlraum definiert ist, in dem Bohnen gemahlen werden können, wobei eines des ersten und zweiten Mahlelements (100, 102) ein feststehendes Mahlelement (102) ist, dessen Position während des Mahlvorgangs fixiert ist, und das andere des ersten und zweiten Mahlelements ein angetriebenes Mahlelement (100) ist, das angetrieben werden kann, um die Bohnen gegen das feststehende Mahlelement zu mahlen, wobei die Fertigungsbaugruppe umfasst:
eine Beurteilungsstation (302A-D, 304A-D), wobei die Beurteilungsstation Messausrüstung umfasst, die für konfiguriert ist:
Beurteilen, vor Anordnen des ersten Mahlelements und des zweiten Mahlelements, um den Mahlraum zu definieren, des ersten Mahlelements unabhängig vom zweiten Mahlelement, um mindestens einen ersten Parameter zu bestimmen, der für eine Geometrie des ersten Mahlelements relevant ist; und/oder
Beurteilen, vor Anordnen des ersten Mahlelements und des zweiten Mahlelements, um den Mahlraum zu definieren, des zweiten Mahlelements unabhängig vom ersten Mahlelement, um mindestens einen zweiten Parameter zu bestimmen, der für eine Geometrie des zweiten Mahlelements relevant ist, und
eine Montagestation (314A, 314B), an der das erste Mahlelement und das zweite Mahlelement so angeordnet sind, dass der Mahlraum basierend auf dem mindestens einen ersten Parameter und/oder dem mindestens einen zweiten Parameter definiert wird, wobei die Montagestation eine anfängliche Montagestufe (314A) umfasst, in der das erste Mahlelement und das zweite Mahlelement zusammengefügt werden; und eine nachfolgende Montagestufe (314B), in der eine Ausrichtung des ersten und zweiten Mahlelements (100, 102) relativ zueinander basierend auf dem mindestens einen ersten Parameter und/oder dem mindestens einen zweiten Parameter durch Drehung des feststehenden Mahlelements um eine Achse (A1), um die das angetriebene Mahlelement angetrieben wird, um sich während des Mahlvorgangs zu drehen, während das angetriebene Mahlelement statisch bleibt, angepasst wird, wobei die Drehung des feststehenden Mahlelements mit einer Anpassung eines Abstands zwischen dem ersten und zweiten Mahlelement einhergeht.

12. Fertigungsbaugruppe (300) nach Anspruch 11, wobei die Messausrüstung so konfiguriert ist, dass sie eine 3D-Messung des ersten Mahlelements (100) und/oder des zweiten Mahlelements (102) durchführt.

13. Fertigungsbaugruppe (300) nach Anspruch 11 oder Anspruch 12, wobei die Messausrüstung so konfiguriert ist, dass sie das erste Mahlelement (100) und/oder das zweite Mahlelement (102) optisch misst.

## Revendications

1. Procédé (200) d'assemblage d'un moulin à café comprenant un premier élément de broyage (100) et un second élément de broyage (102), un espace de broyage étant défini entre les premier et second éléments de broyage dans lequel les grains de café peuvent être broyés, dans lequel l'un des premier et second éléments de broyage (100, 102) est un élément de broyage fixe (102) dont la position est fixe pendant le broyage des grains, l'autre des premier et second éléments de broyage étant un élément de broyage entraîné (100) pouvant être entraîné pour broyer les grains contre l'élément de broyage fixe, le procédé comprenant :
l'utilisation d'un équipement de mesure pour évaluer (202A), avant d'agencer le premier élément de broyage et le second élément de broyage pour définir l'espace de broyage, le premier élément de broyage, indépendamment du second élément de broyage, afin de déterminer au moins un premier paramètre relatif à une géométrie du premier élément de broyage ; et/ou
l'utilisation d'un équipement de mesure pour évaluer (202B), avant d'agencer le premier élément de broyage et le second élément de broyage pour définir l'espace de broyage, le second élément de broyage, indépendamment du premier élément de broyage, afin de déterminer au moins un second paramètre relatif à une géométrie du second élément de broyage, dans lequel le procédé comprend en outre :
l'agencement (204), sur la base du au moins un premier paramètre et/ou du au moins un second paramètre, du premier élément de broyage et du second élément de broyage pour définir l'espace de broyage, dans lequel l'agencement comprend le réglage, sur la base du au moins un premier paramètre et/ou du au moins un second paramètre, d'une orientation des premier et second éléments de broyage (100, 102) l'un par rapport à l'autre, le réglage de l'orientation des premier et second éléments de broyage l'un par rapport à l'autre comprenant la rotation de l'élément de broyage fixe autour d'un axe (A1) autour duquel l'élément de broyage entraîné est entraîné en rotation pendant ledit broyage, alors que l'élément de broyage entraîné reste statique, la rotation de l'élément de broyage fixe étant accompagnée du réglage d'une distance séparant les premier et second éléments de broyage l'un de l'autre.

2. Procédé (200) selon la revendication 1, dans lequel le réglage de l'orientation des premier et second éléments de broyage (100, 102) l'un par rapport à l'autre comprend la minimisation d'une variation d'une distance à travers un espace défini entre les premier et second éléments de broyage sur la base du au moins un premier paramètre et du au moins un second paramètre.

3. Procédé (200) selon la revendication 2, dans lequel la distance est une distance minimale à travers l'espace où les premier et second éléments de broyage (100, 102) se rapprochent le plus l'un de l'autre.

4. Procédé (200) selon l'une quelconque des revendications 1 à 3, comprenant la définition d'une distribution granulométrique prévue d'un produit moulu pouvant être délivré par le moulin à café, sur la base du premier et/ou du second paramètre(s).

5. Procédé (200) selon l'une quelconque des revendications 1 à 4, dans lequel le premier élément de broyage (100) comprend des premières dents (126) présentant des surfaces qui délimitent partiellement l'espace de broyage, le au moins un premier paramètre comprenant au moins un paramètre de premières dents relatif à une géométrie des premières dents.

6. Procédé (200) selon l'une quelconque des revendications 1 à 5, dans lequel le second élément de broyage (102) comprend des secondes dents (128) présentant des surfaces qui délimitent partiellement l'espace de broyage, le au moins un second paramètre comprenant au moins un paramètre de secondes dents relatif à une géométrie des secondes dents.

7. Procédé (200) selon l'une quelconque des revendications 1 à 6, dans lequel l'évaluation comprend une mesure 3D du premier élément de broyage (100) et/ou du second élément de broyage (102).

8. Procédé (200) selon l'une quelconque des revendications 1 à 7, dans lequel l'évaluation comprend une mesure optique du premier élément de broyage et/ou du second élément de broyage.

9. Procédé (200) selon l'une quelconque des revendications 1 à 8, comprenant la sélection du premier élément de broyage (100) parmi une pluralité de premiers éléments de broyage sur la base du au moins un premier paramètre et/ou la sélection du second élément de broyage (102) parmi une pluralité de seconds éléments de broyage sur la base du au moins un second paramètre.

10. Procédé (200) selon l'une quelconque des revendications 1 à 9, dans lequel le procédé n'inclut pas le broyage d'un produit à l'aide du moulin à café lors de la fabrication du moulin à café.

11. Ensemble de fabrication (300) pour l'assemblage d'un moulin à café, lequel moulin à café comprend un premier élément de broyage (100) et un second élément de broyage (102), un espace de broyage étant défini entre les premier et second éléments de broyage dans lequel les grains de café peuvent être broyés, dans lequel l'un des premier et second éléments de broyage (100, 102) est un élément de broyage fixe (102) dont la position est fixe pendant le broyage des grains, l'autre des premier et second éléments de broyage étant un élément de broyage entraîné (100) pouvant être entraîné pour broyer les grains contre l'élément de broyage fixe, l'ensemble de fabrication comprenant :
un poste d'évaluation (302A-D, 304A-D), le poste d'évaluation comprenant un équipement de mesure configuré pour :
évaluer, avant l'agencement du premier élément de broyage et du second élément de broyage pour définir l'espace de broyage, le premier élément de broyage, indépendamment du second élément de broyage, afin de déterminer au moins un premier paramètre relatif à une géométrie du premier élément de broyage ; et/ou
évaluer, avant l'agencement du premier élément de broyage et du second élément de broyage pour définir l'espace de broyage, le second élément de broyage, indépendamment du premier élément de broyage, afin de déterminer au moins un second paramètre relatif à une géométrie du second élément de broyage, et
un poste d'assemblage (314A, 314B) au niveau duquel le premier élément de broyage et le second élément de broyage sont agencés pour définir l'espace de broyage sur la base du au moins un premier paramètre et/ou du au moins un second paramètre, dans lequel le poste d'assemblage comprend une étape d'assemblage initiale (314A) au cours de laquelle le premier élément de broyage et le second élément de broyage sont combinés ; et une étape d'assemblage ultérieure (314B) au cours de laquelle une orientation des premier et second éléments de broyage (100, 102) l'un par rapport à l'autre est ajustée, sur la base du au moins un premier paramètre et/ou du au moins un second paramètre, par rotation de l'élément de broyage fixe autour d'un axe (A1) autour duquel l'élément de broyage entraîné est entraîné en rotation pendant ledit broyage, alors que l'élément de broyage entraîné reste statique, la rotation de l'élément de broyage fixe étant accompagnée d'un réglage d'une distance séparant les premier et second éléments de broyage l'un de l'autre.

12. Ensemble de fabrication (300) selon la revendication 11, dans lequel l'équipement de mesure est configuré pour effectuer une mesure 3D du premier élément de broyage (100) et/ou du second élément de broyage (102).

13. Ensemble de fabrication (300) selon la revendication 11 ou la revendication 12, dans lequel l'équipement de mesure est configuré pour mesurer optiquement le premier élément de broyage (100) et/ou le second élément de broyage (102).
